Europäisches Patentamt

European Patent Office

Office européen des brevets

(19)

(11) Veröffentlichungsnummer: **0 471 341 A2**

# EUROPÄISCHE PATENTANMELDUNG

(12)

(21) Anmeldenummer: **91113580.4**

(22) Anmeldetag: **13.08.91**

(51) Int. Cl.5 **G05D 7/01**

(30) Priorität: **16.08.90 DE 4025983**

(43) Veröffentlichungstag der Anmeldung:
**19.02.92 Patentblatt 92/08**

(84) Benannte Vertragsstaaten:
**AT BE CH DE DK ES FR GB GR IT LI LU NL SE**

(71) Anmelder: **Bosch-Siemens Hausgeräte GmbH
Patent- und Vertragswesen
Hochstrasse 17 Postfach 10 02 50
W-8000 München 80(DE)**
Anmelder: **Coca-Cola Company
P.O.Drawer 1734
Atlanta Georgia 30301(US)**

(72) Erfinder: **Eichler, Walter, Dipl.-Ing. (FH)
Adalbert Stifter-Strasse 19
W-7929 Gerstetten(DE)**
Erfinder: **Peglow, Bringfried
Schlesienstrasse 7
W-7922 Herbrechtingen(DE)**

(74) Vertreter: **Kessl, Josef et al
c/o Bosch-Siemens Hausgeräte GMBH
Patent-und Vertragswesen Hochstrasse 17
W-8000 München 80(DE)**

(54) **Durchflussmengen-Regelventil, insbesondere für begaste Flüssigkeiten.**

(57) Die Erfindung betrifft ein Durchflußmengen-Regelventil, insbesondere für begaste Flüssigkeiten, z. B. zur portionierten Ausgabe von karbonisiertem Wasser aus einem Vorratsbehälter zum Mischen mit Getränkekonzentraten in einem Getränkeautomat.

Bei dem erfindungsgemäßen Ventil verbreitet sich der Innenraum von einer Einlaßöffnung (1) zu einer Kammer (2), in der senkrecht zu der Richtung des zufließenden Wassers eine Membrane (3) mit einer Bohrung (31) angeordnet ist.

In die Kammer (2) einströmendes Wasser tritt durch die Bohrung (31) der Membrane (3) und drückt diese in Richtung eines Stifts (4), der auf der der Einlaßöffnung (2) abgewandten Seite der Membrane (3) im Bereich ihrer Bohrung (31) angeordnet ist.

Das erfindungsgemäße Ventil weist keine frei beweglichen Teile auf und zeichnet sich durch eine kompakte Bauweise aus.

Fig. 1

Die Erfindung betrifft ein Durchflußmengen-Regelventil, insbesondere für begaste Flüssigkeiten, zum Beispiel zur portionierten Ausgabe von karbonisiertem Wasser aus einem Vorratsbehälter zum Mischen mit Getränkekonzentraten in einem Getränkeautomat.

Ein derartiges Regelventil dient zur Konstanthaltung der Durchflußmengen von Flüssigkeiten je Zeiteinheit, um in Verbindung mit einer zeitlichen Begrenzung der Flüssigkeitsabgabe hohe Genauigkeit des auszugebenden Flüssigkeitsvolumens zu erzielen. Beispielsweise in Getränkeautomaten, durch die aus karbonisiertem Wasser einerseits und Getränkekonzentraten andererseits Erfrischungsgetränke gemischt und bereitgestellt werden, wird gefordert, daß das vorgegebene Mischungsverhältnis ihrer beiden Komponenten möglichst exakt eingehalten wird, da ansonsten eine Geschmacksverschiebung die Qualität des Erfrischungsgetränks stark beeinflussen würde.

Für die in relativ kleinen Mengen zuzumischenden Getränkekonzentrate wird zumeist eine Volumendosierung angewendet und damit auch eine hohe Volumenausgabegenauigkeit erreicht.

Um auch die erforderliche Volumen-Ausgabegenauigkeit bezüglich des karbonisierten Wassers zu erreichen und damit das gewünschte Mischungsverhältnis zu erzielen, ist es erforderlich, die beiden das Volumen bestimmenden Komponenten, nämlich die Durchflußmenge und die Zuflußzeit möglichst genau festzulegen. Die Durchflußzeit ist relativ gut über Auf-Zu-Ventile zu steuern, wenngleich die Schließ- und Öffnungsvorgänge bei relativ kurzen Ausgabezeiten Störgrößen darstellen.

Die Beherrschung der Durchflußmenge ist wesentlich problematischer. Kurzfristig auftretende Druckunterschiede und Temperaturunterschiede müssen ebenso Berücksichtigung finden wie bei begasten Flüssigkeiten die Tatsache, daß bei Druckabfall und durch Strömungsverwirbelungen sowie bei Erwärmung im Bereich des Durchflußmengen-Regelventils das Flüssigkeits-Gas-Gemisch zum Entgasen neigt.

In Getränkeautomaten wird das karbonisierte Wasser in einem sogenannten Karbonisator aus Wasser und CO2-Gas gemischt und unter Druck und gekühlt bis in den Bereich des Gefrierpunkts bevorratet. Bei der Entnahme von karbonisiertem Wasser treten erhebliche Druckunterschiede auf. Die Ausgabe erfolgt in unter atmosphärischem, also gleichbleibendem Druck stehenden Bereiche. Das Durchflußmengen-Regelventil ist bei längeren Ruhezeiten auf Raumtemperatur erwärmt, durch Ausgabe des karbonisierten Wassers wird es bis auf unter 0°C abgekühlt. An ein derartiges Regelventil sind aber hohe Anforderungen gerichtet. Als wirtschaftlich herzustellenden Gegenstand soll es aber auch preisgünstig sein.

Aus dem deutschen Patent P 34 30 953 ist bereits eine Anordnung zum Mischen von Flüssigkeiten mit einem druckunabhängigen Durchfluß-Regelventil bekannt. Das Durchfluß-Regelventil weist einen mit Rückstellkraft einer Feder beaufschlagten verschieblichen Kolben in einer zylinderförmigen Kolbenkammer auf.

Das Durchflußmedium strömt durch eine zentrale Bohrung im Kolben zu Auslaßöffnungen im Zylinder, welche durch die Kolben-Regelkante teilweise abgedeckt werden. Die Feder bringt die Gegenkraft zum Mediumsdruck auf und stellt den Arbeitsdruck ein. Zwischen Kolben und Zylinder ist ein Spalt vorzusehen, der Dichtfunktion hat. Der Spalt ist daher klein und eng toleriert. Verschmutzungen zwischen Kolben und Zylinder stören die Funktion der Regelung und führen zu falschen Ausgaben beziehungsweise zum Ausfall der Anordnung. Zudem birgt der relative komplexe Aufbau des bekannten Regelventils mit einer Mehrzahl, auch sich bewegender Einzelkomponenten die Gefahr eines Ausfalls der Gesamtanordnung in sich, wenn bereits eine Einzelkomponente in ihrer Funktionsfähigkeit beeinträchtigt ist.

Im Hinblick auf diesen Sachverhalt ist es Aufgabe der vorliegenden Erfindung, ein kompakt ausgebildetes Durchflußmengen-Regelventil zu schaffen, das nur eine geringe Anzahl sich bewegender Einzelkomponenten aufweist.

Ein Durchflußmengen-Regelventil, das diesen Anforderungen genügt, ist erfindungsgemäß dadurch gekennzeichnet, daß sich der Ventilinnenraum von einer Einlaßöffnung zu einer Kammer verbreitet, in der senkrecht zu der Richtung des zufließenden Wassers eine Membrane mit einer Bohrung angeordnet ist, daß in der Kammer auf der der Einlaßöffnung abgewandten Seite der Membrane im Bereich ihrer Bohrung ein Stift in der Weise angeordnet ist, daß das in die Kammer einströmende Wasser durch die Bohrung der Membrane tritt und diese in Richtung des Stifts drückt.

Die Erfindung zeichnet sich durch eine Mehrzahl von Vorteilen auf. Das Ventil weist nur ein bewegliches Teil, nämlich die Membrane auf, die zudem anders als ein Kolben beim Stand der Technik nicht frei beweglich, sondern im Ventilkörper eingespannt ist.

Die Membrane nutzt sich praktisch nicht ab und gewährleistet damit eine hohe Lebensdauer des Ventils. Die relativ geringe Masse der Membrane bewirkt eine nur kurze Ansprech- und Einschwingzeit.

Das Ventil läßt sich kompakt und aufgrund des einfachen Aufbaus kostengünstig ausgestalten. Die kompakte Bauweise ergibt sich insbesondere dann, wenn das Ventil aus nur zwei Gehäuseteilen besteht, wobei ein erstes Gehäuseteil mit der Einlaßöffnung in seinem Innenbereich die sich an die Einlaßöffnung anschließende Kammer sowie das kreisförmige Lager für die Membrane bildet und wobei ein zweites Gehäuseteil mit der Auslaßöffnung in seinem Innenbereich einen den zu der Auslaßöffnung offenen Raum sowie das Lager für den Stift und das Gegenlager für die Membrane bildet.

Eine weitere vorteilhafte Ausführungsform ist dadurch gekennzeichnet, daß die Kammer auf ihrer der Einlaßöffnung abgewandeten Seite ein Auflager aufweist, gegen das die Membrane bei einem vorgebenen Druck des einströmenden Wassers drückt. Hierdurch erhöht sich die Federsteifigkeit der Membrane. Eine plastische Verformung der Membrane, welche die Funktionsfähigkeit des Ventils einschränken würde, wird unterbunden.

Der Stift ist vorteilhafterweiese senkrecht zur Membrane verstellbar gelagert. Die verstellbare Lagerung ermöglicht es, Fertigungstoleranzen auszugleichen.

Nach einer weiteren vorteilhaften Ausführungsform der Erfindung weist der Stift einen die Verstellbewegung in Richtung der Membrane begrenzenden Anschlag auf. Dieser verhindert, daß der Stift die Membrane selbst bei maximalem Druck des zufließenden Wassers berührt und damit möglicherweise deren Funktionsfähigkeit einschränkt oder die Membrane zerstört.

Als vorteilhaft erweist es sich ferner, daß der Stift im Bereich der Bohrung der Membrane eine kegelförmige Spitze, insbesondere mit einem Winkel von 90° aufweist. Bei dieser Ausgestaltung des Stiftes ist der Einfluß einer möglichen CO2-Imprägnierung des Wassers und die Abhängigkeit von der Temperatur so gering, daß eine vorgegebene Toleranz der Ausgabemenge eingehalten wird.

Als strömungsmechanisch besonders vorteilhaft erweist sich eine Ausführungsform, bei der die Kammer im Ventilinnenraum im Bereich der Membrane einen kreisförmigen Querschnitt aufweist und daß die Bohrung zentral in der Membrane angeordnet ist. Dabei ist die Membrane in einem vorgegebenen Abstand von ihrer kreisförmigen Außenkante kreislinienförmig gelagert.

Eine weitere vorteilhafte Ausführungsform des Ventils ist dadurch gekennzeichnet, daß sich die Kammer auf die der Einlaßöffnung abgewandte Seite der Membrane erstreckt und einen in eine Auslaßöffnung mündenden Raum bildet. Dieser Raum nimmt das durch die Membranbohrung geströmte Wasser auf und ist auch in Abhängigkeit des Durchmessers der Auslaßöffnung so dimensioniert, daß das Wasser einen vorgegebenen Rückstau bildet und als gebündelter Strahl das Ventil verläßt. Dies wird auch dadurch erreicht, daß die Auslaßöffnung in ein Auslaßrohr mit einem gegenüber der Auslaßöffnung größeren Durchmesser mündet.

Weitere vorteilhafte Ausführungsformen sind dadurch gekennzeichnet, daß ein Auslaßrohr gegenüber der Zuflußrichtung des Wassers insbesondere in einem Winkel von 90° abgewinkelt ist, oder seitlich versetzt und parallel zur Zuflußrichtung angeordnet ist. Diese Ausgestaltungen verzögern die Ausflußgeschwindigkeit und reduzieren die Geräuschbildung.

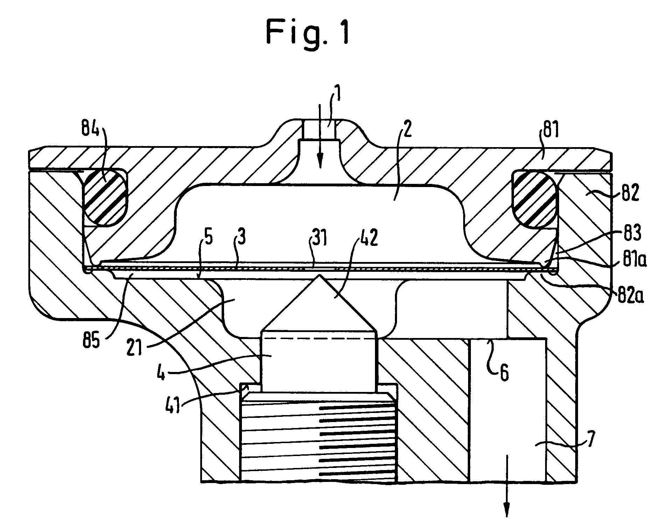

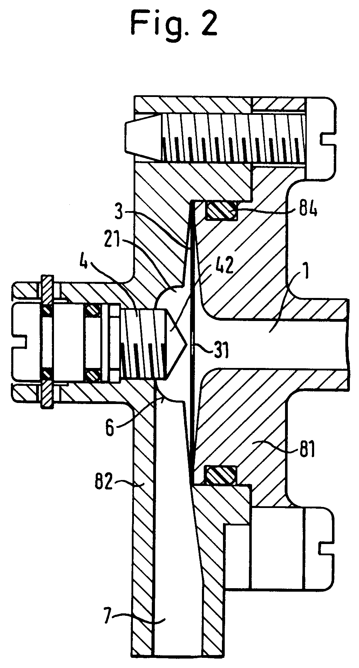

Nach den Merkmalen der Erfindung ausgestaltete Ausführungsbeispiele sind anhand der Figuren 1 und 2 im folgenden näher beschrieben. Beide Figuren zeigen jeweils einen Schnitt durch das Durchflußmengen-Regelventil gemäß der Erfindung, wie es zweckmäßigerweise zur Ausgabe von karbonisiertem Wasser aus einem Karbonisator eines Getränkeauto maten zur Anwendung kommt, durch den aus dem karbonisierten Wasser und zuzumischenden Getränkekonzentraten Erfrischungsgetränke zubereitet werden.

Der Innenraum des in der Figur 1 dargestellten Ventils verbreitet sich ausgehend von einer Einlaßöffnung 1 zu einer Kammer 2. Der Übergang von der Einlaßöffnung 1 zu der Kammer 2, die zumindest im Bereich einer Membrane 3 kreisförmig ausgebildet ist, sowie die Kammerwandung weisen in dem in der Figur dargestellten Ausführungsbeispiel eine geschwungene Form auf. Eine solche Form ohne Volumensprung verhindert, daß nennenswerte Mengen des zunächst im Wasser gebundenen Gases ausschlagen.

Die Membrane 3 ist senkrecht zu der Richtung des zufließenden Wassers angeordnet und weist eine vorzugsweise zentrale Bohrung 31 auf, deren Durchmesser vorzugsweise kleiner oder gleich dem Durchmesser der Einlaßöffnung 1 ist.

Die Kammer 2 bildet auf ihrer der Einlaßöffnung abgewandten Seite einen Raum 21, in den ein Stift 4 ragt. Der Stift 4 befindet sich in der Verlängerung der von der Einlaßöffnung 1 zur Bohrung 31 der Membrane 3 führenden Strecke.

Der Stift 4 weist im Bereich der Bohrung der Membrane vorzugsweise eine kegelförmige Spitze 42 auf, die einen Winkel von 90° bildet. Er kann senkrecht zur Membrane verstellbar gelagert und als justierbare Schraube ausgebildet sein. Die Verstellbewegung in Richtung der Membrane wird durch einen Anschlag 41 begrenzt.

Mit dem Stift wird der Arbeitspunkt des Ventils eingestellt. Der Arbeitspunkt wird für einen vorgegebenen Abstand zwischen der (belasteten) Membrane und seiner insbesondere kegelförmigen Oberfläche im Bereich der Membranenbohrung im wesentlichen durch den Durchmesser der Membranenbohrung, die Steifigkeit der Membrane und die Lagerung der Membrane im Ventilinnenraum bestimmt. Mit der Justierung des Stiftes 4 läßt sich der Regelbereich des Ventils nur in engen Grenzen verändern; die Justierung dient hauptsächlich dazu, etwa vorhandene Fertigungstoleranzen auszugleichen.

Die Membrane 3 ist in einem vorgegebenen Abstand von ihrer kreisförmigen Außenkante kreislinienförmig gelagert. Die kreislinien- oder ringförmige Lagerung der Membrane wird zum einen durch das in der Figur 1 oben dargestellte erste Gehäuseteil 81 und zum anderen durch das in der Figur unten dargestellte zweite Gehäuseteil 82 gebildet. Die Membrane 3 ist durch beide Gehäuseteile eingespannt, wobei die Gehäuseteile im Bereich der Membranlagerung einen Freiraum 83 für die kreisförmigen Außenkante der Membrane bilden. Drückt einströmendes Wasser gegen die Membrane, bewegt sich diese im Bereich ihrer zentralen Bohrung gegen den Stift 4 und bewegt sich in dem durch die Gehäuseteile gebildeten Freiraum 83 (in der Figur 1) nach oben.

Beide Gehäuseteile 81, 82 sind im Bereich der Membranlagerung so ausgeformt, daß sie die Bewegung der Membrane unter dem Einfluß der an der Membrane auftretenden Druckänderungen unterstützen. Beispielsweise weist das erste Gehäuseteil 81 im Bereich der Membranlagerung am Fußpunkt seiner Außenwandung 81a, die zugleich eine Wandung des Freiraums 83 bildet, die in der Figur 1 darstellte abgerundete Form auf. Eine korrespondierende abgerundete Form weist auch das zweite Gehäuseteil 82 an der der Ventilmitte zugewandten Seite einer horizontalen Membranauflage 82a auf.

Bei Überschreiten eines vorgegebenen Drucks des einströmenden Wassers stützt sich die Membrane 3 auf ein Auflager 5 ab, das an der der Einlaßöffnung 1 abgewandten Seite der Membrane 3 angeordnet ist. Damit erhöht sich die Federsteifigkeit der Membrane 3; ihre plastische Verformung, die die Funktionsfähigkeit einschränken bzw. aufheben würde, wird vermieden. Zugleich wird der Regelbereich des Ventils erweitert.

Die Kammer 2 des Durchflußmengen-Regelventil erstreckt sich auf die der Einlaßöffnung abgewandte Seite der Membrane 3 und bildet einen in eine Auslaßöffnung 6 mündenden Raum 21. In der Mitte dieses Raums 21 befindet sich der Stift 4. Der Raum 21 bildet unmittelbar an der Membrane 3 einen horizontalen scheibenförmigen Bereich 85, der nach oben durch die Membrane in ihrer Ruhestellung und nach unten durch das Auflager 5 begrenzt wird. Die Höhe des Bereichs 85 entspricht der Membrandurchbiegung bei dem vorgegebenen Solldruck. Der durch den Bereich 85 gebildete Raum ermöglicht, daß durch die pumpartige Bewegung der Membrane 3 bei Druckänderungen kleine Schmutzteilchen aus dem Wasser ausgespült werden. Der Raum 21 nimmt das durch die Bohrung 31 der Membrane 3 und die Spitze des Stiftes 4 strömende Wasser auf und führt es zum Auslauf. Der Raum ist so dimensioniert, daß sich ein vorgegebener Rückstau des Wassers bildet und dabei Gasblasen, die durch aus dem Wasser ausfallendes Gas gebildet werden, mit aufgenommen werden.

Bei der in Figur 1 dargestellten Ausführungsform ist die Auslaßöffnung 6 parallel zur Membrane 3 im Raum 21 angeordnet, während die Auslaßöffnung 6 bei der in Figur 2 dargestellten Ausführungsform an einer Seitenwand des Raums 21 in etwa senkrecht zur Membrane 3 angeordnet ist.

Die Auslaßöffnung 6 mündet in ein Auslaßrohr 7, das beispielsweise seitlich versetzt und parallel zur Zuflußrichtung des Wassers (Figur 1) oder senkrecht zu dieser (Figur 2) angeordnet ist. Das Auslaßrohr 7 weist jeweils einen gegenüber der Auslaßöffnung 6 größeren Durchmesser auf. Die Engstelle, die durch die Auslaßöffnung 6 gebildet wird, sowie die Umlenkung der Wasserflußrichtung verzögern den Wasseraustritt und reduzieren die Ausflußgeschwindigkeit. Dies bewirkt auch eine verminderte Geräuschentwicklung des ausfließenden Wassers. Das beschriebene Verhältnis der Durchmesser von Auslaßöffnung 6 und Auslaßrohr 7 bewirkt, daß der austretende, gebremste Wasserstrahl gebündelt das Auslaßrohr 7 in der gesamten Breite ausfüllt und ein Versprühen des austretenden Strahls vermieden wird.

Die Membrane 3 übernimmt die Funktion des Kolbens mit der Druckfeder beim Stand der Technik. Beim erfindungsgemäßen Durchflußmengen-Regelventil erfolgt die Regelung durch einen Ringspalt zwischen der Membranbohrung 31 und der kegelförmigen Fläche des Stifts 4. Der Druck des in den Ventilinnenraum einströmenden Wassers bewegt die Membrane 3 in Richtung der Kegelfläche des Stifts 4 und stellt damit, abhängig von dem Wasserdruck und der Federkraft der Membrane 3, den Ringspalt ein.

Dieser bildet die Öffnungsfläche für das Wasser. Der Regelungsprozeß ist auch von dem Durchmesser der Membranbohrung 31 abhängig. Die Regelung setzt erst dann ein, wenn die Öffnungsfläche durch den Ringspalt kleiner ist als die Fläche der Membranbohrung. Der Winkel der Kegelspitze des Stifts 4 ist eine Funktion der Elastizität der Membrane 3. So beträgt der Winkel bei der Ausführungsform nach Figur 1 etwa 90°, bei der Ausführungsform nach Figur 2 etwa 120°.

Die kompakte Bauweise des Durchflußmengen-Regelventils ergibt sich auch dadurch, daß es lediglich aus zwei Gehäuseteilen besteht, das heißt aus einem ersten Gehäuseteil 81 mit der Einlaßöffnung 1 und einem zweiten Gehäuseteil 82 mit der Auslaßöffnung 6. Das erste Gehäuseteil 81 bildet in seinem Innenbereich die sich an die Einlaßöffnung 1 anschließende Kammer 2 sowie das kreisförmige Lager für die Membrane 3. Das zweite Gehäuseteil 82 bildet in seinem Innenbereich den zu der Auslaßöffnung 6 offenen Raum 21 sowie das Lager für den Stift 4 und das Gegenlager für die Membrane 3. Das Auslaßrohr 7 ist vorzugsweise wie in den Figuren 1 und 2 dargestellt in das zweite Gehäuseteil 82 integriert.

Beide Gehäuseteile 81, 82 sind zunächst im Bereich der ringförmigen Lagerung der fest eingespannten Membrane gegeneinander abgedichtet. Weiter werden beide Gehäuseteile durch einen Dichtring 84 abgedichtet.

Das Durchflußmengen-Regelventil läßt sich beispielsweise für Druckbereiche von 4±1 bar und 5±1 bar auslegen. Andere Druckbereiche bzw. Durchflußmengen lassen sich durch entsprechende Änderungen der Membranbohrung realisieren.

**Patentansprüche**

1. Durchflußmengen-Regelventil insbesondere für begaste Flüssigkeiten, zum Beispiel zur portionierten Ausgabe von karbonisiertem Wasser aus einem Vorratsbehälter zum Mischen mit Getränkekonzentraten in einem Getränkeautomat,
   **dadurch gekennzeichnet**,
   daß sich der Ventilinnenraum von einer Einlaßöffnung(1) zu einer Kammer(2) verbreitet, in der senkrecht zu der Richtung des zufließenden Wassers eine Membrane(3) mit einer Bohrung(31) angeordnet ist, daß in der Kammer(2) auf der der Einlaßöffnung(2) abgewandten Seite der Membrane(3) im Bereich ihrer Bohrung(31) ein Stift(4) in der Weise angeordnet ist, daß das in die Kammer(2) einströmende Wasser durch die Bohrung(31) der Membrane(3) tritt und diese in Richtung des Stifts(4) drückt.

2. Durchflußmengen-Regelventil nach Anspruch 1,
   **dadurch gekennzeichnet**,
   daß die Kammer(2) auf ihrer der Einlaßöffnung(1) abgewandten Seite ein Auflager(5) aufweist, gegen das die Membrane(3) bei einem vorgegebenen Druck des einströmenden Wassers drückt.

3. Durchflußmengen-Regelventil nach Anspruch 1 oder 2,
   **dadurch gekennzeichnet**,
   daß der Stift(4) senkrecht zur Membrane(3) verstellbar gelagert ist.

4. Durchflußmengen-Regelventil nach Anspruch 3,
   **dadurch gekennzeichnet**,
   daß der Stift(4) als justierbare Schraube ausgebildet ist.

5. Durchflußmengen-Regelventil nach Anspruch 4,
   **dadurch gekennzeichnet**,
   daß der Stift(4) einen die Verstellbewegung in Richtung der Membrane(3) begrenzenden Anschlag(41) aufweist.

6. Durchflußmengen-Regelventil nach einem der vorstehenden Ansprüche,
   **dadurch gekennzeichnet**,
   daß der Stift(4) im Bereich der Bohrung(31) der Membrane(3) eine kegelförmige Spitze(42) aufweist.

7. Durchflußmengen-Regelventil nach Anspruch 6,
   **dadurch gekennzeichnet**,
   daß die kegelförmige Spitze(42) einen Winkel von 90° aufweist.

8. Durchflußmengen-Regelventil nach einem der vorstehenden Ansprüche,
   **dadurch gekennzeichnet**,
   daß die Kammer(2) im Ventilinnenraum im Bereich der Membrane(3) einen kreisförmigen Querschnitt aufweist und daß die Bohrung(31) zentral in der Membrane(3) angeordnet ist.

9. Durchflußmengen-Regelventil nach Anspruch 8,
   **dadurch gekennzeichnet**,
   daß die Membrane(3) in einem vorgegebenen Abstand von ihrer kreisförmigen Außenkante kreislinienförmig gelagert ist.

10. Durchflußmengen-Regelventil nach einem der vorstehenden Ansprüche,
    **dadurch gekennzeichnet**,
    daß sich die Kammer(2) auf die der Einlaßöffnung(1) abgewandte Seite der Membrane(3) erstreckt und einen in eine Auslaßöffnung(6) mündenden Raum(21) bildet.

11. Durchflußmengen-Regelventil nach Anspruch 10,
    **dadurch gekennzeichnet**,
    daß die Auslaßöffnung(6) in ein seitlich versetzt und parallel zur Zuflußrichtung des Wassers angeordnetes Auslaßrohr (7) mündet.

12. Durchflußmengen-Regelventil nach Anspruch 10,

**dadurch gekennzeichnet**,
daß die Auslaßöffnung(6) in ein gegenüber der Zuflußrichtung des Wassers um 90˚ abgewinkeltes Auslaßrohr (7) mündet.

13. Durchflußmengen-Regelventil nach einem der Ansprüche 10 bis 12,
**dadurch gekennzeichnet**,
daß die Auslaßöffnung(6) in ein Auslaßrohr(7) mit einem gegenüber der Auslaßöffnung(6) größeren Durchmesser mündet.

14. Durchflußmengen-Regelventil nach einem der vorstehenden Ansprüche,
**dadurch gekennzeichnet**,
daß es aus einem ersten Gehäuseteil(81) mit der Einlaßöffnung(1) und einem zweiten Gehäuseteil(82) mit der Auslaßöffnung(6) besteht, daß das erste Gehäuseteil(81) in seinem Innenbereich die sich an die Einlaßöffnung(1) anschließende Kammer(2) sowie das kreisförmige Lager für die Membrane(3) bildet, daß das zweite Gehäuseteil(82) in seinem Innenbereich den zu der Auslaßöffnung(6) offenen Raum(21) sowie das Lager für den Stift(4) und das Gegenlager für die Membrane(3) bildet.

15. Durchflußmengen-Regelventil nach Anspruch 14,
**dadurch gekennzeichnet**,
daß das Auslaßrohr(7) in das zweite Gehäuseteil(82) integriert ist.

# Fig. 1

# Fig. 2